# EUROPEAN PATENT SPECIFICATION

(11) **EP 1 724 506 B1**
(45) Date of publication and mention of the grant of the patent: **19.08.2009**
(21) Application number: 06010392.6
(22) Date of filing: 19.05.2006
(51) Int. Cl.: F16L 3/233, F16L 33/08

(54) **Securing tool and clamp tool**
Sicherungs- und Klemmwerkzeug
Outil de fixation et de serrage

(30) Priority: 20.05.2005 JP 2005148239; 14.03.2006 JP 2006069150
(43) Date of publication of application: 22.11.2006
(73) Proprietor: CATEYE CO., LTD., Osaka-shi, Osaka 546-0041 (JP)
(72) Inventor: Okuda, Yoji, Osaka-shi Osaka 546-0041 (JP); Ueda, Takashi, Osaka-shi Osaka 546-0041 (JP)
(74) Representative: Hofer, Dorothea

(56) References cited:
- EP-A- 0 096 589
- US-A- 3 311 959
- US-A1- 2003 106 919

## Description

### BACKGROUND OF THE INVENTION

### Field of the Invention

The present invention relates to a securing tool and a clamp tool, and more particularly, it relates to a securing tool and a clamp tool easy to attach and provided in a compact structure.

### Description of the Background Art

An attachment tool for attaching a two-wheeler component such as a headlamp is known in general, as disclosed in Japanese Patent Laying-Open No. 08-113175 (Patent Document 1), for example.

A worm gear type clamp is also known in general, as disclosed in Japanese Patent Laying-Open No. 08-287979 (Patent Document 2) or U.S. Patent No. 6,685,229 (Patent Document 3), for example.

US 2003/0106919 A1 describes an attachment apparatus which attaches a first object, e.g. a headlamp for bicycles, to a second object, e.g. bicycle handlebar in a manner that the first object can be located in a desired orientation with respect to the second object.

However, the attachment tool described in Patent Document 1 secures a substantially U-shaped member to a handlebar or the like by bolting, and the thickness of a rubber member bonded to the inner periphery of the substantially U-shaped member must be varied to meet the diameter of the handlebar. Consequently, the operation of attachment is likely to be complicated.

On the other hand, the structure of the clamp described in Patent Document 2 or 3 is insufficient to achieve high securing strength/clamping strength in a compact structure, although that clamp excellently follows the diameter of a clamped member.

### SUMMARY OF THE INVENTION

An object of the present invention is to provide a securing tool and a clamp tool easy to attach and provided in a compact structure.

A securing tool according to an aspect of the present invention, employed for securing a component to a bar, comprises a body, a securing portion connected to the body for securing the component, a clamp member clamping the bar and a rotational operating portion in the form of a ring provided in a rotatable manner with respect to the body, while an end of the clamp member is secured to the body and the clamp member passes through the inside of the ring of the rotational operating portion, and the inner diameter of a loop formed by the clamp member is varied by rotating the rotational operating portion, wherein the rotational operating portion is located between said body and a cap secured to said body, in a direction defined by the axis of rotation of said rotational operating portion.

According to the aforementioned structure, the inner diameter of the loop formed by the clamp member is varied by rotating the rotational operating portion. Thus, the bar can be clamped with the clamp member. Consequently, the component is secured to a handlebar through the securing tool. The clamp member passes through the inside of the ring of the rotational operating portion, so that a compact structure not inhibiting attachment of the component is achieved.

The aforementioned securing tool preferably further comprises a guide portion secured to the body for guiding the clamp member passing through the inside of the ring of the rotational operating portion. Thus, the bar can be easily clamped with the clamp member.

In the aforementioned securing tool, the body preferably has a portion along the outer periphery of the bar. Thus, the body can be more strongly secured to the bar. Consequently, the securing strength of the component is improved.

In the aforementioned securing tool, the component includes a headlamp or a speed meter for a two-wheeler in some cases. According to the aforementioned structure, a securing tool capable of easily securing these components is obtained.

In some cases, the bar to which the aforementioned securing tool is attached is a handlebar or a frame of a two-wheeler. According to the aforementioned structure, a securing tool easily attachable to these locations is obtained.

A securing tool according to another aspect of the present invention, employed for securing a plurality of components, comprises a body, a band-shaped member wound on the plurality of components and a rotational operating portion in the form of a ring provided in a rotatable manner with respect to the body, while an end of the band-shaped member is secured to the body and the band-shaped member passes through the inside of the ring of the rotational operating portion, and the inner diameter of a loop formed by the band-shaped member is varied by rotating the rotational operating portion.

According to the aforementioned structure, the inner diameter of the loop formed by the band-shaped member is varied by rotating the rotational operating portion. Thus, the band-shaped member can be wound on the plurality of components. Consequently, the plurality of components are secured through the securing tool. The band-shaped member passes through the inside of the ring of the rotational operating portion, so that a compact securing structure is achieved.

A clamp tool according to the present invention comprises a body, a clamp member clamping a component and a rotational operating portion in the form of a ring provided in a rotatable manner with respect to the body, while an end of the clamp member is secured to the body and the clamp member passes through the inside of the ring of the rotational operating portion, and the inner diameter of a loop formed by the clamp member is varied by rotating the rotational operating portion.

According to the aforementioned structure, the inner diameter of the loop formed by the clamp member is varied by rotating the rotational operating portion. Thus, the component can be clamped with the clamp member. Further, the clamp member passes through the inside of the ring of the rotational operating portion, so that a compact clamping structure is achieved.

In each of the aforementioned securing tool and the aforementioned clamp tool, the inner peripheral surface of the rotational operating portion is preferably formed in the shape of an internal thread, and the surface of the clamp member or the band-shaped member is preferably formed with grooves corresponding to the internal thread.

Therefore, the internal thread and the grooves engage with each other so that the clamp member or the band-shaped member progresses in the direction of passing through the ring of the rotational operating portion. Thus, the inner diameter of the loop formed by the clamp member or the band-shaped member is varied.

According to the present invention, a securing tool and a clamp tool easy to attach and provided in a compact structure can be obtained.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a bicycle to which a headlamp is attached with a securing tool according to a first embodiment of the present invention;
Fig. 2 more specifically illustrates the state shown in Fig. 1;
Fig. 3 illustrates the securing tool according to the first embodiment of the present invention;
Figs. 4 to 7 illustrate the securing tool shown in Fig. 3 as viewed along arrows DR1 to DR4 respectively;
Fig. 8 is a sectional view taken along the line VIII-VIII in Fig. 4;
Fig. 9 illustrates a securing tool according to a second embodiment of the present invention;
Figs. 10 to 13 illustrate the securing tool shown in Fig. 9 as viewed along arrows DR1 to DR4 respectively;
Fig. 14 is a sectional view taken along the line XIV-XIV in Fig. 10;
Fig. 15 is a sectional view taken along the line XV-XV in Fig. 10;
Fig. 16 is a perspective view showing a securing tool according to a third embodiment of the present invention;
Fig. 17 is a side elevational view showing the securing tool according to the third embodiment of the present invention;
Figs. 18 to 20 illustrate the securing tool shown in Fig. 17 as viewed along arrows DR1 to DR3 respectively;
Fig. 21 is a sectional view taken along the line XXI-XXI in Fig. 18;
Fig. 22 illustrates a sensor attached to the securing tool shown in Figs. 16 to 21;
Fig. 23 illustrates a state of attaching a display on the securing tool shown in Figs. 16 to 21;
Fig. 24 illustrates the display attached to the securing tool shown in Figs. 16 to 21;
Fig. 25 illustrates the display attached to a bicycle with the securing tool shown in Figs. 16 to 21;
Fig. 26 illustrates an exemplary securing state with a securing tool according to a comparative example;
Fig. 27 illustrates another exemplary securing state with the securing tool according to the comparative example; and
Figs. 28 and 29 illustrate still another exemplary securing state with the securing tool according to the comparative example.

### DESCRIPTION OF THE PREFERRED EMBODIMENTS

Embodiments of the securing tool and the clamp tool according to the present invention are now described. Identical or corresponding portions are denoted by the same reference numerals, and redundant description may not be repeated.

The range of the present invention is not necessarily restricted to numbers and quantities mentioned in the following description of the embodiments, unless otherwise stated. Further, components mentioned in the following description are not necessarily essential to the present invention, unless otherwise stated. When a plurality of embodiments are present in the following description, proper combination of characteristic parts of the embodiments is planned from the first, unless otherwise stated.

### (First Embodiment)

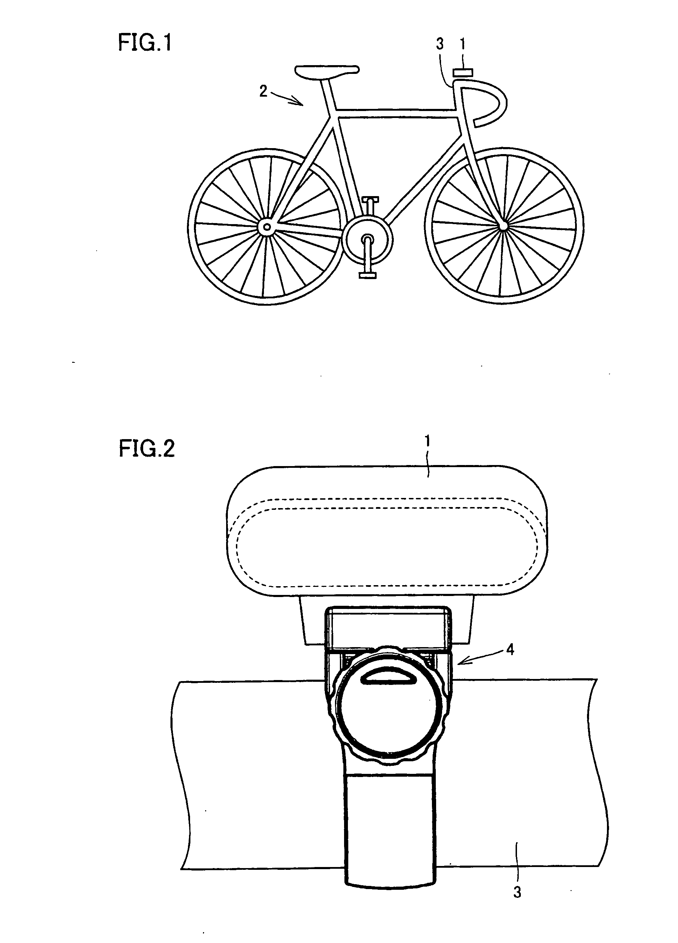

Fig. 1 illustrates a bicycle 2 to which a headlamp 1 is attached with a securing tool 4 according to a first embodiment of the present invention. Referring to Fig. 1, headlamp 1 is secured to a handlebar 3 of bicycle 2.

Fig. 2 more specifically illustrates the state shown in Fig. 1. Fig. 2 shows headlamp 1 and handlebar 3 as viewed from behind (the side of the rider of bicycle 2). Referring to Fig. 2, headlamp 1 is attached to handlebar 3 through securing tool 4.

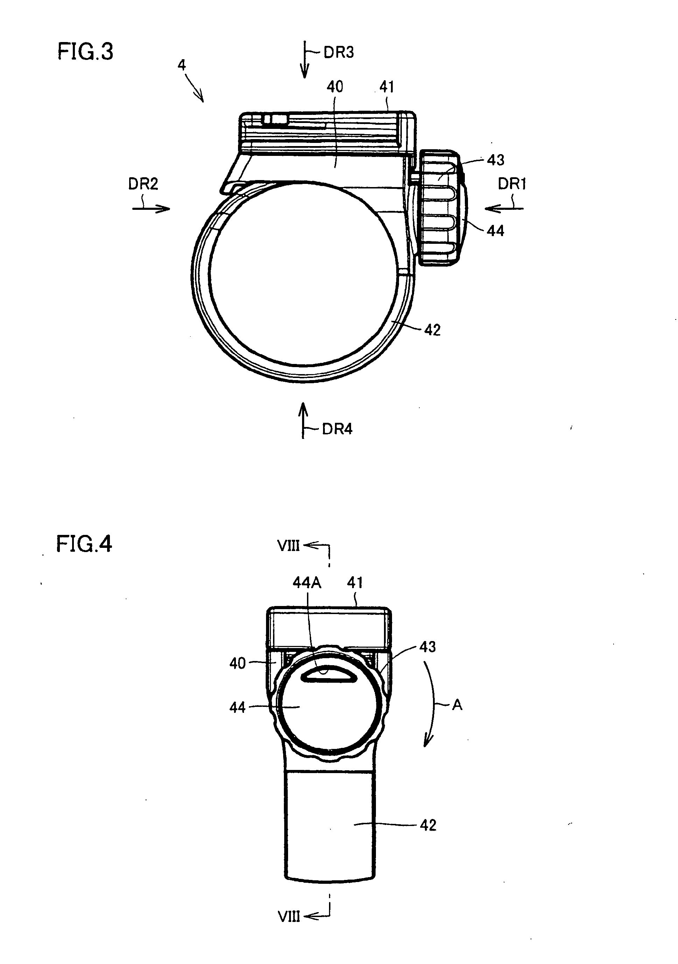

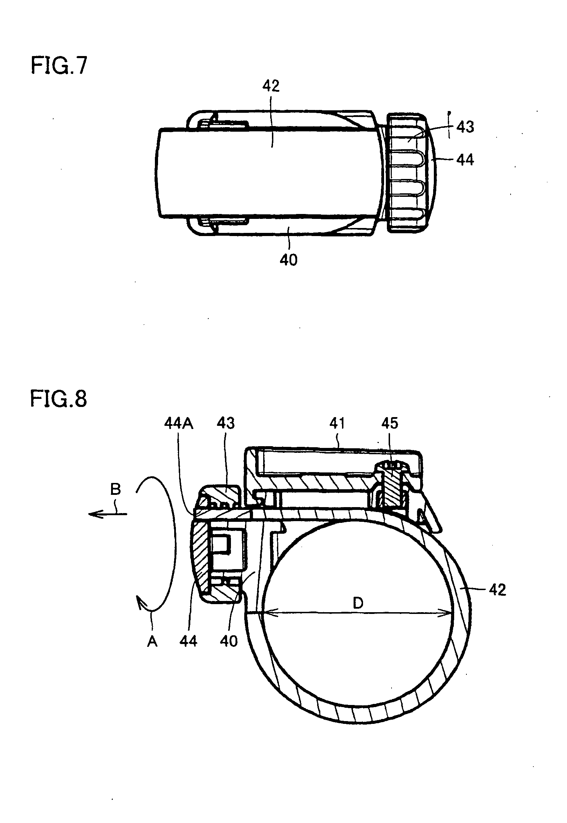

Figs. 3 to 8 illustrate securing tool 4 according to this embodiment. Figs. 4, 5, 6 and 7 illustrate securing tool 4 shown in Fig. 3 as viewed along arrows DR1, DR2, DR3 and DR4 respectively. Fig. 8 is a sectional view taken along the line VIII-VIII in Fig. 4. Referring to Figs. 3 to 8, securing tool 4 is a worm gear-type clamping device including a body 40, a bracket 41, a clamp band 42, a control knob 43 and a cap 44.

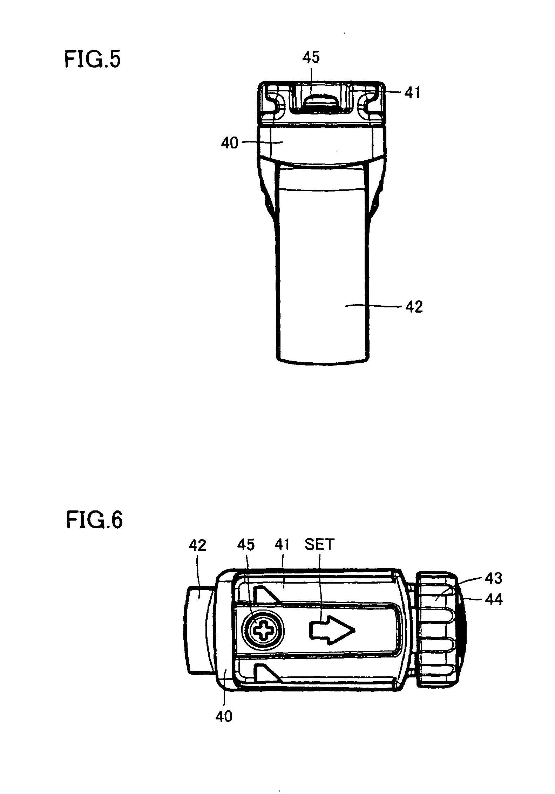

Bracket 41 for securing headlamp 1 is assembled into body 40 through a screw 45. In order to attach headlamp 1 to bracket 41, headlamp 1 is slid along arrow SET (see Fig. 6) with respect to securing tool 4. Thus, headlamp 1 is attached to securing tool 4.

An end of clamp band 42 is connected to body 40. Clamp band 42 forms a loop, for clamping handlebar 3 by receiving handlebar 3 in this loop. Another end of clamp band 42 passes through a through hole 44A formed in cap 44. Cap 44 is secured to body 40.

Control knob 43 provided in the form of a ring is rotatably attached to body 40. Control knob 43 is provided on the radial outer side of cap 44. Therefore, clamp band 42 passes through the inside of the ring of control knob 43.

The inner peripheral surface of control knob 43 is formed in the shape of an internal thread. The surface of clamp band 42 is formed with grooves (not shown in Figs. 3 to 8) engaged with the aforementioned internal thread. Thus, the worm gear-type clamping device (clamp tool) is constituted.

In order to secure headlamp 1 to handlebar 3 in practice, clamp band 42 is wound on handlebar 3, and the forward end thereof is inserted into through hole 44A of cap 44. Then, control knob 43 is rotated along arrow A (see Figs. 4 and 8). Thus, clamp band 42 is fed along arrow B (see Fig. 8). Therefore, the inner diameter D (see Fig. 8) of the loop formed by clamp band 42 is so reduced that handlebar 3 can be clamped with clamp band 42. Thus, securing tool 4 is secured to handlebar 3. Headlamp 1 may be previously attached to bracket 41 of securing tool 4, or may be attached to after securing tool 4 is secured to handlebar 3.

According to securing tool 4, as hereinabove described, headlamp 1 can be secured to handlebar 3 with a simple operation.

In other words, securing tool 4 according to this embodiment is a securing tool for securing headlamp 1 that is the component for the "two-wheeler" to handlebar 3, comprising body 40, bracket 41 corresponding to the "securing portion" connected to body 40 for securing headlamp 1, clamp band 42 corresponding to the "clamp member" clamping handlebar 3 and control knob 43 corresponding to the "rotation operating portion" in the form of a ring provided in a rotatable manner with respect to body 40. One end of clamp band 42 is secured to body 40. Clamp band 42 passes through the inside of the ring of control knob 43. Control knob 43 is so rotated as to change the inner diameter D (see Fig. 8) of the loop formed by clamp band 42. Cap 44 secured to body 40 is formed with through hole 44A. Clamp band 42 passing through the inside of the ring of control knob 43 is guided by being received in through hole 44A.

According to the aforementioned structure, handlebar 3 can be clamped with clamp band 42. Consequently, headlamp 1 is secured to handlebar 3 through securing tool 4. Clamp band 42 passes through the inside of the ring of control knob 43, thereby a compact securing structure not inhibiting attachment of headlamp 1 is achieved. Through hole 44A guiding clamp band 42 is so formed as to simplify the operation of clamping handlebar 3 with clamp band 42.

Body 40 of securing tool 4 has a portion along the outer periphery of handlebar 3. Thus, body 40 can be directly secured to handlebar 3. Consequently, body 40 can be more strongly secured to handlebar 3. Thus, securing strength of headlamp 1 is improved.

As hereinabove described, securing tool 4 includes a worm gear-type clamp tool. In other words, the clamp tool according to this embodiment comprises body 40, clamp band 42 corresponding to the "clamp member" clamping handlebar 3 corresponding to the "component" and control knob 43 corresponding to the "rotation operating portion" in the form of a ring provided in a rotatable manner with respect to body 40, One end of clamp band 42 is secured to body 40, clamp band 42 passes through the inside of the ring of control knob 43, and the inner diameter of the loop formed by clamp band 42 is varied by rotating control knob 43. Thus, handlebar 3 is clamped.

### (Second Embodiment)

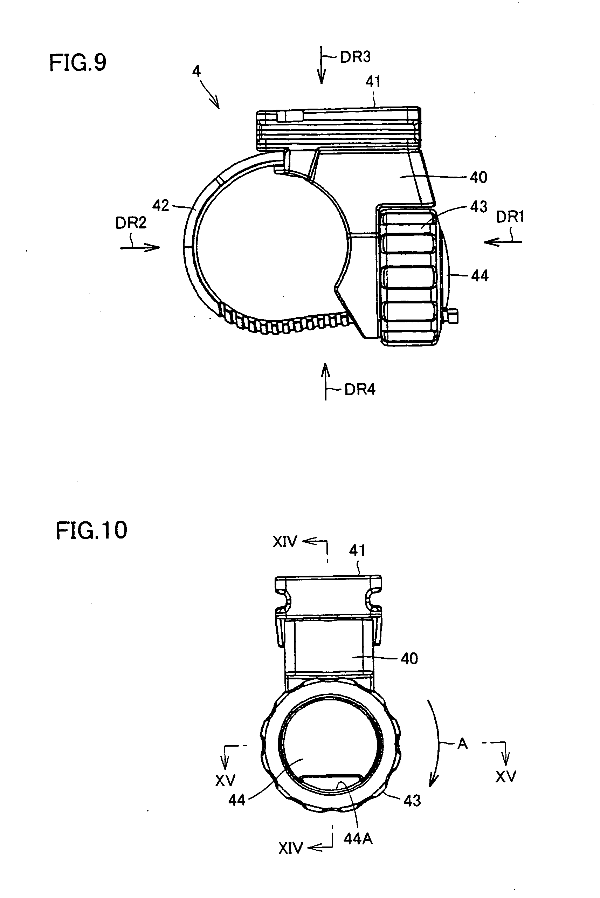

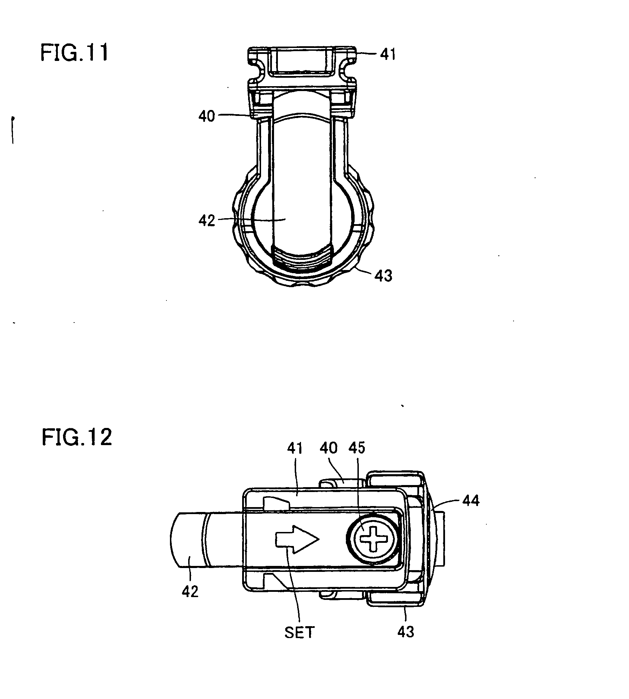

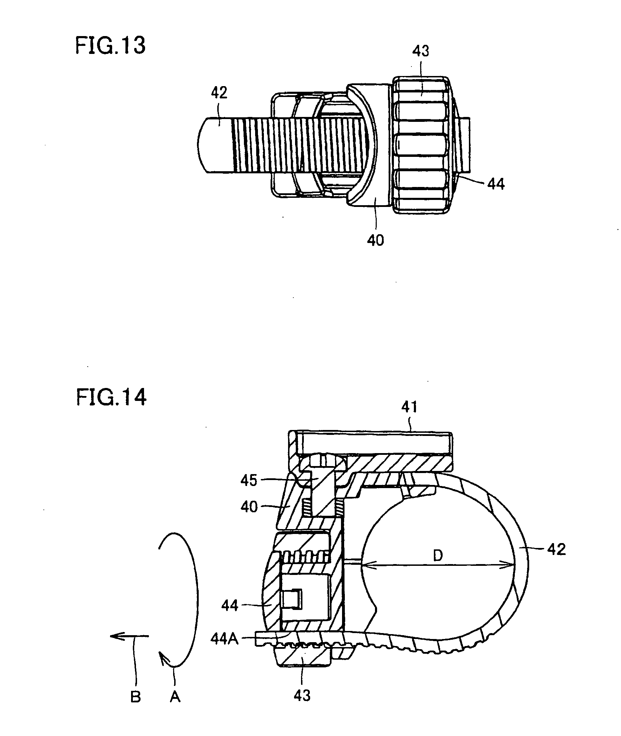

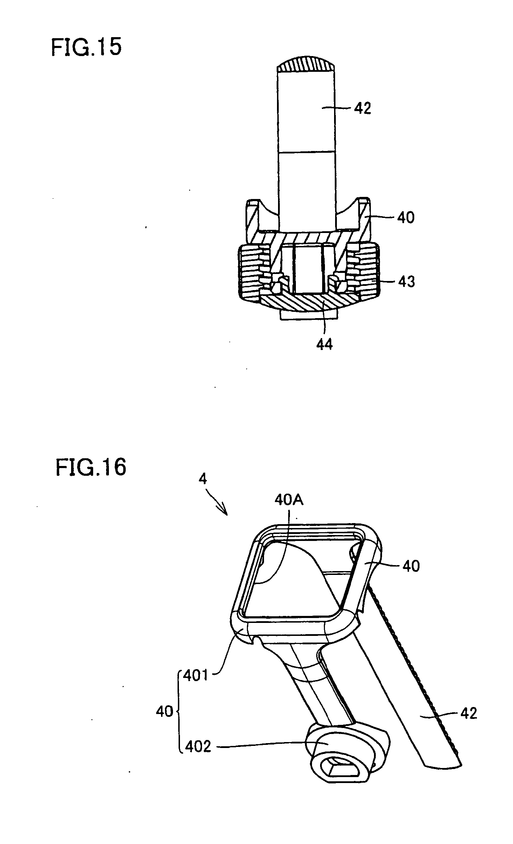

Figs. 9 to 15 illustrate a securing tool 4 according to a second embodiment of the present invention. Figs. 10, 11, 12 and 13 illustrate securing tool 4 shown in Fig. 9 as viewed along arrows DR1, DR2, DR3 and DR4 respectively. Figs. 14 and 15 are sectional views taken along the lines XIV-XIV and XV-XV in Fig. 10 respectively. Referring to Figs. 9 to 15, securing tool 4 according to this embodiment is a modification of securing tool 4 according to the first embodiment, and includes a body 40, a bracket 41, a clamp band 42, a control knob 43 and a cap 44 similarly to the first embodiment.

Securing tool 4 according to this embodiment is characterized in that the position of control knob 43 is shifted downward as compared with that of securing tool 4 according to the first embodiment. According to this embodiment, body 40 relatively downwardly extends due to the aforementioned arrangement. According to this embodiment, therefore, a portion of body 40 along the outer periphery of a handlebar 3 is relatively long. More specifically, the ratio of body 40 in a loop for clamping handlebar 3 is increased to about 1/3 in this embodiment, while that in the first embodiment is about 1/4. Consequently, the effect of improving securing strength by directly securing body 40 to handlebar 3 can be further improved. In other words, securing strength of a headlamp 1 is further improved through securing tool 4 according to this embodiment.

### (Third Embodiment)

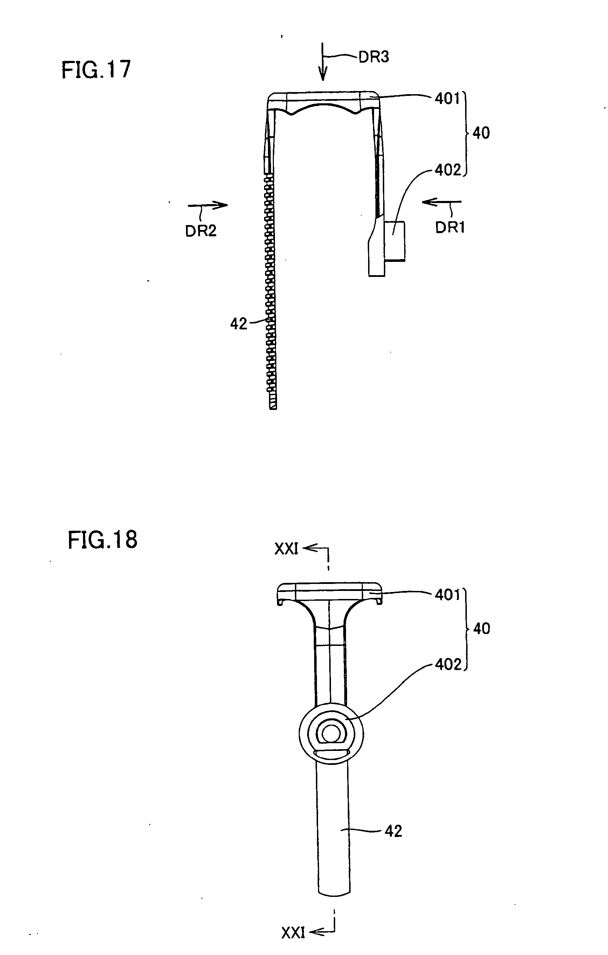

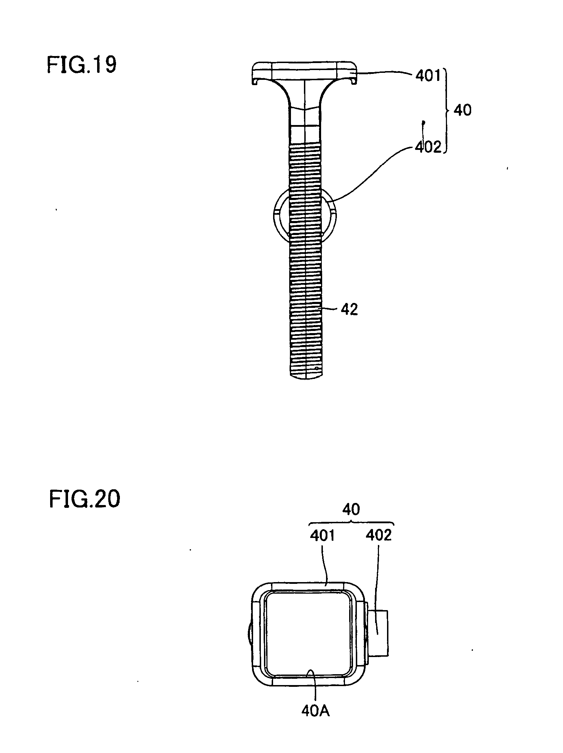

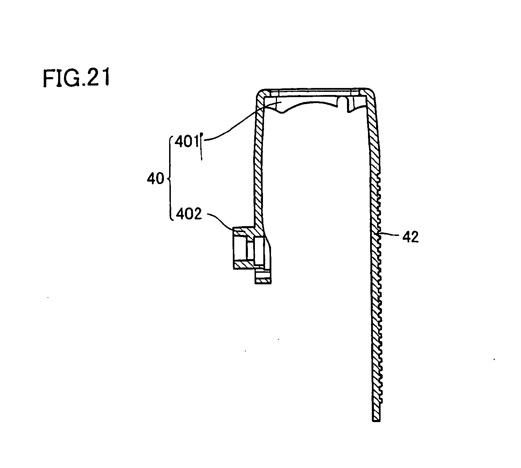

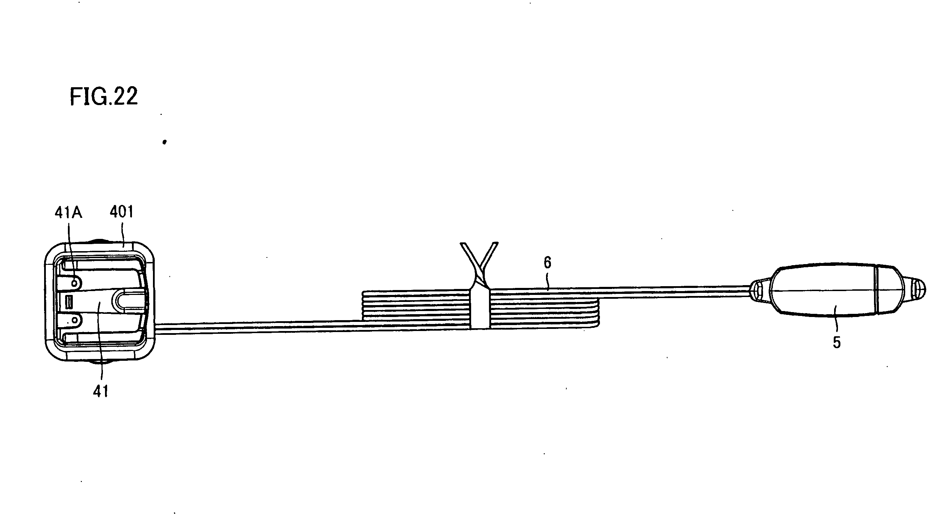

Figs. 16 to 21 illustrate a securing tool 4 according to a third embodiment of the present invention. Figs. 18, 19 and 20 illustrate securing tool 4 as viewed along arrows DR1, DR2 and DR3 in Fig. 17 respectively. Fig. 21 is a sectional view taken along the line XXI-XXI in Fig. 18. Fig. 22 illustrates a sensor attached to securing tool 4.

Referring to Figs. 16 to 22, securing tool 4 according to this embodiment is a modification of securing tools 4 according to the first and second embodiments, and includes a worm gear-type clamp tool similarly to the first and second embodiments. Securing tool 4 comprises a body 40, a bracket 41, a clamp band 42 and a control knob 43.

Securing tool 4 according to this embodiment is characterized in that bracket 41 is detachably attached to body 40. Figs. 16 to 21 show body 40 from which bracket 41 is detached. Body 40 has a first portion 401 to which bracket 41 is attached and a second portion 402 to which control knob 43 is attached. First portion 401 is formed with an opening 40A. Bracket 41 is fitted into opening 40A, to be integrated with first portion 401 of body 40. Opening 40A and bracket 41 are substantially square-shaped, and bracket 41 is also attachable to opening 40A in a state rotated by 90° from that shown in Fig. 22.

Securing tool 4 according to this embodiment secures a display 1A displaying information such as the traveling speed, the traveling time, the mileage, the time of day, the average speed and the maximum speed of a bicycle. One end of a cable 6 is connected to bracket 41. Another end of cable 6 is connected to a sensor (speed sensor, for example) 5. Information fetched from sensor 5 is transmitted to bracket 41 through cable 6. Display 1A fetches this information through an electrode 41A of bracket 41, and displays the same.

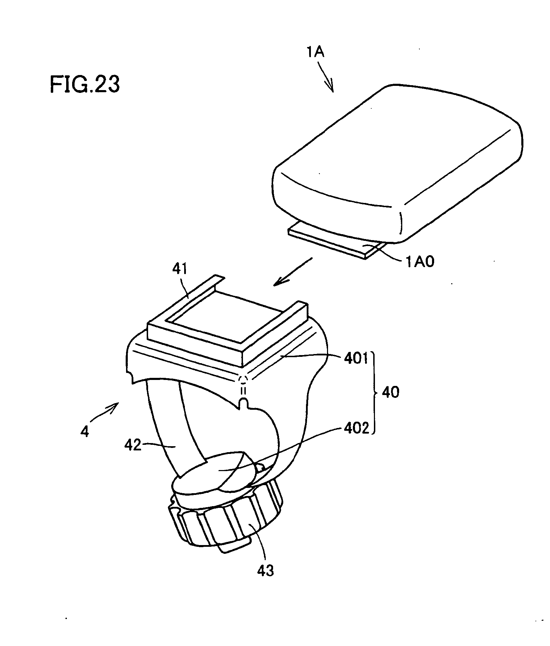

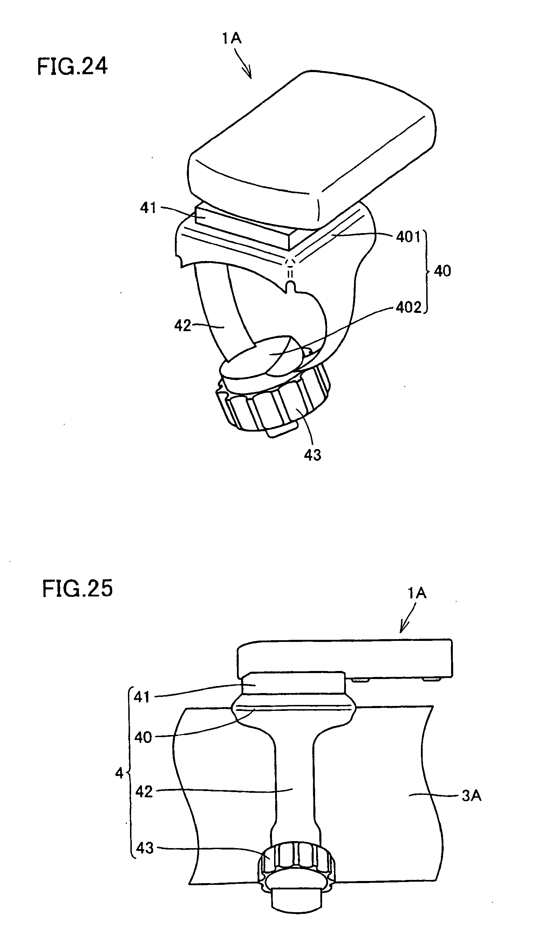

Fig. 23 illustrates a state of attaching display 1A to securing tool 4, and Fig. 24 illustrates display 1A attached to securing tool 4.

Referring to Figs. 23 and 24, display 1A is slid along arrow in Fig. 23, for engaging an engaging portion 1A0 of display 1A with bracket 41 of securing tool 4. Thus, display 1A is attached to securing tool 4.

Fig. 25 illustrates display 1A attached to a frame 3A of the bicycle with securing tool 4. As shown in Fig. 25, display 1A is attached to frame 3A by winding clamp band 42 of securing tool 4 on frame 3A and clamping frame 3A. Display 1A, attached to frame (stem, for example) 3A extending along the longitudinal direction of the bicycle in Fig. 25, can also be attached to a handlebar horizontally extending along the bicycle by attaching bracket 41 to body 40 in the state rotated by 90°, as hereinabove described.

### (Comparative Example)

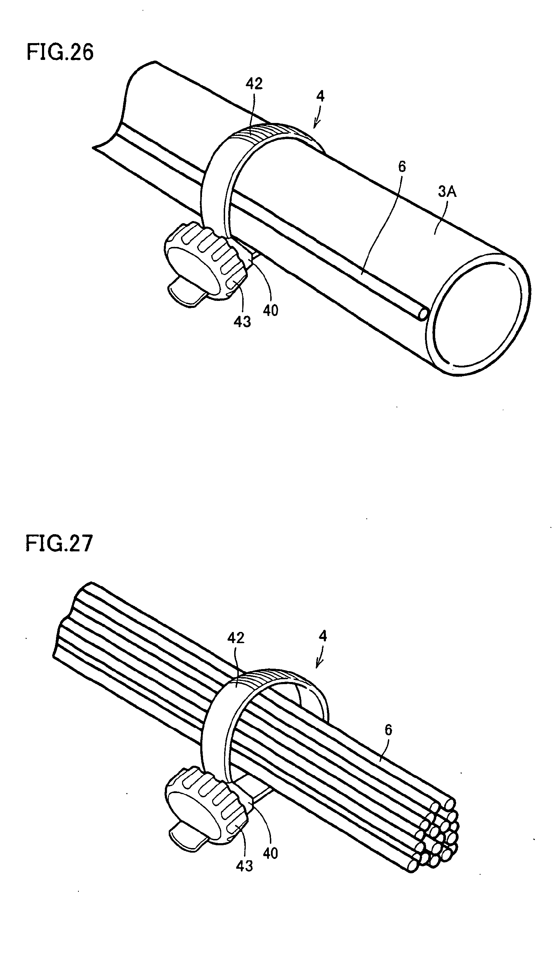

Figs. 26 to 29 illustrate securing states with a securing tool 4 according to a comparative example. Referring to Figs. 26 to 29, securing tool 4 according to this comparative example is employed for securing a plurality of components, and includes a worm gear-type clamp tool similarly to the first to third embodiments. Securing tool 4 comprises a body 40, a clamp band 42 corresponding to the "band-shaped member" wound on the plurality of components and a ringlike control knob 43 corresponding to the "rotation operating portion" provided in a rotatable manner with respect to body 40. One end of clamp band 42 is connected to body 40. Clamp band 42 passes through the inside of a ring of control knob 43, and the inner diameter of a loop formed by clamp band 42 is varied by rotating control knob 43. Thus, securing tool 4 secures the plurality of components to each other.

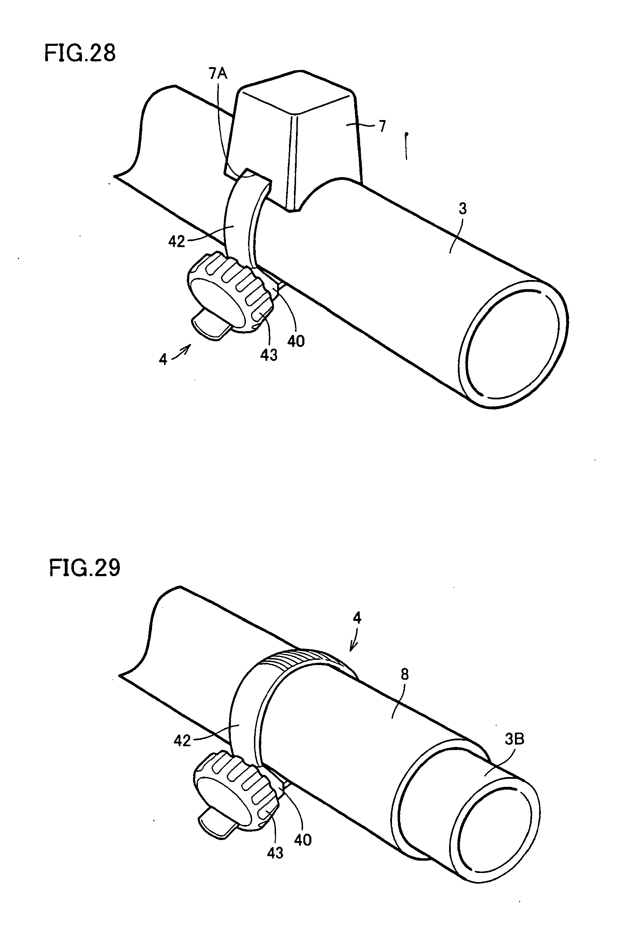

In the case of Fig. 26, securing tool 4 secures a cable 6 to a frame 3A of a bicycle. In the case of Fig. 27, securing tool 4 bundles a plurality of cables 6 together. In the case of Fig. 28, securing tool 4 secures a remote switch 7 to a handlebar 3 of the bicycle. Remote switch 7 has an opening 7A for passing clamp band 42 therethrough. In the case of Fig. 29, securing tool 4 secures a hose 8 to a pipe 3B. In other words, frame 3A and cable 6 constitute the "plurality of components" in Fig. 26, plurality of cables 6 constitute the "plurality of components" in Fig. 27, handlebar 3 and remote switch 7 constitute the "plurality of components" in Fig. 28, and pipe 3B and hose 8 constitute the "plurality of components" in Fig. 29.

While securing tool 4 is attached to handlebar 3 for locating control knob 43 on the side of the rider of bicycle 2 in the aforementioned first embodiment, securing tool 4 may alternatively be attached to handlebar 3 for locating control knob 43 on the front side of bicycle 2. While securing tool 4 according to each of the aforementioned embodiments mainly secures the "two-wheeler component(s)", the aforementioned securing structure is also employable as an attaching structure for a component other than the "two-wheeler component".

Although the present invention has been described and illustrated in detail, it is clearly understood that the same is by way of illustration and example only and is not to be taken by way of limitation, the scope of the present invention being limited only by the terms of the appended claims.

## Claims

1. A securing tool (4) for securing a component (1) to a bar (3), comprising:
a body (40);
a securing portion (41) connected to said body (40) for securing said component (1);
a clamp member (42) clamping said bar (3); and
a rotational operating portion (43) in the form of a ring provided in a rotatable manner with respect to said body (40), and a cap (44) secured to said body (40), wherein
an end of said clamp member (42) is secured to said body (40) and said clamp member (42) passes through the inside of said ring of said rotational operating portion (43), and
the inner diameter (D) of a loop formed by said clamp member (42) is varied by rotating said rotational operating portion (43), and said rotational operating portion (43) is located between said body (40) and said cap (44) in a direction defined by the axis of rotation of said rotational operating portion (43).

2. The securing tool according to claim 1, further comprising a guide portion (44) secured to said body (40) for guiding said clamp member (42) passing through said rotational operating portion (43).

3. The securing tool according to claim 1 or 2, wherein
said body (40) has a portion along the outer periphery of said bar (3).

4. The securing tool according to any once of claims 1 to 3, wherein
said component (1) including a headlamp or a speed meter of a two-wheeler to be attached to said securing portion (41).

5. The securing tool according to any one of claims 1 to 4, wherein the clamp member (42) is formed to clamp
said bar (3, 3A), said bar being a handlebar (3) or a frame (3A) of a two-wheeler.

6. The securing tool according to claim 1, wherein
the inner peripheral surface of said rotational operating portion (43) is formed in the shape of an internal thread, and
the surface of said clamp member (42) is formed with grooves engaged with said internal thread.

## Patentansprüche

1. Sicherungswerkzeug (4) zum Sichern einer Komponente (1) an einer Stange (3), mit:
einem Körper (40);
einem Sicherungsabschnitt (41), der zum Sichern der Komponente (1) mit dem Körper (40) verbunden ist;
einem Klemmelement (42), das an die Stange (3) geklemmt wird; und
einem Drehbetätigungsabschnitt (43) in Gestalt eines Ringes, der hinsichtlich des Körpers (40) drehbar vorgesehen ist, und einer Kappe (44), die an dem Körper (40) gesichert ist, wobei
ein Ende des Klemmelements (42) an dem Körper (40) gesichert ist und das Klemmelement (42) durch das Innere des Ringes des Drehbetätigungsabschnitts (43) hindurch tritt, und
der Innendurchmesser (D) einer Schlinge, die durch das Klemmelement (42) gebildet ist, durch Drehen des Drehbetätigungsabschnitts (43) geändert wird, und der Drehbetätigungsabschnitt (43) zwischen dem Körper (40) und der Kappe (44) in einer Richtung angeordnet ist, die durch die Drehachse des Drehbetätigungsabschnitts (43) definiert ist.

2. Sicherungswerkzeug gemäß Anspruch 1, des Weiteren mit einem Führungsabschnitt (44), der an dem Körper (40) zum Führen des Klemmelementes (42) gesichert ist, das durch das Drehbetätigungselement (43) hindurch tritt.

3. Sicherungswerkzeug gemäß Anspruch 1 oder 2, wobei
der Körper (40) einen Abschnitt entlang des Außenumfangs der Stange (3) aufweist.

4. Sicherungswerkzeug gemäß einem der Ansprüche 1 bis 3, wobei
die Komponente (1) einschließlich eines Vorderlichts oder eines Tachos eines Zweirads an dem Sicherungsabschnitt (41) anzubringen ist.

5. Sicherungswerkzeug gemäß einem der Ansprüche 1 bis 4, wobei das Klemmelement (42) zum Klemmen der Stange (3, 3A) ausgebildet ist, wobei die Stange eine Lenkerstange (3) oder ein Rahmen (3A) eines Zweirads ist.

6. Sicherungswerkzeug gemäß Anspruch 1, wobei
die Innenumfangsfläche des Drehbetätigungsabschnitts (43) in Gestalt eines Innengewindes ausgebildet ist, und
die Fläche des Klemmelements (42) mit Nuten ausgebildet ist, die mit dem Innengewinde im Eingriff sind.

## Revendications

1. Outil de fixation (4) pour fixer un composant (1) sur une barre (3), comprenant :
un corps (40) ;
une portion de fixation (41) reliée audit corps (40) pour fixer ledit composant (1) ;
un élément de serrage (42) serrant ladite barre (3), et
une portion de commande rotative (43) ayant la forme d'une bague placée d'une manière à pouvoir tourner par rapport audit corps (40), et un chapeau (44) fixé sur ledit corps (40), dans lequel
une extrémité dudit élément de serrage (42) est fixée sur ledit corps (40) et
ledit élément de serrage (42) passe par l'intérieur de ladite bague de ladite portion de commande rotative (43), et
le diamètre intérieur (D), d'une boucle formée par ledit élément de serrage (42) est modifié en faisant tourner ladite portion de commande rotative (43), et ladite portion de commande rotative (43) est placée entre ledit corps (40) et ledit chapeau (44) dans une direction définie par l'axe de rotation de ladite portion de commande rotative (43).

2. Outil de fixation selon la revendication 1, comprenant en outre une portion de guidage (44) fixée sur ledit corps (40) pour guider ledit élément de serrage (42) passant par ladite portion de commande rotative (43).

3. Outil de fixation la revendication 1 ou 2, dans lequel ledit corps (40) a une portion le long de la périphérie extérieure de ladite barre (3).

4. Outil de fixation selon l'une quelconque des revendications 1 à 3, dans lequel
ledit composant (1) inclut un phare ou un compteur de vitesse d'un véhicule à deux roues devant être fixé sur ladite portion de fixation (41).

5. Outil de fixation selon l'une quelconque des revendications 1 à 4, dans lequel l'élément de serrage (42) est formé pour serrer ladite barre (3, 3A), ladite barre étant un guidon (3) ou un cadre (3A) d'un véhicule à deux roues.

6. Outil de fixation selon la revendication 1, dans lequel la surface périphérique intérieure de ladite portion de commande rotative (43) a la forme d'un filetage intérieur, et
la surface dudit élément de serrage (42) est formée avec des rainures coopérant avec ledit filetage intérieur.
